# EUROPEAN PATENT APPLICATION

(11) **EP 1 944 160 A1**
(43) Date of publication of application: **16.07.2008**
(21) Application number: 07100468.3
(22) Date of filing: 12.01.2007
(51) Int. Cl.: B32B 27/20, B41M 1/04, B42F 21/00

(54) **Multilayer film, especially for the production of office articles, use of the film and process for manufacturing the film**

(71) Applicant: Renolit AG, 67547 Worms (DE)
(72) Inventor: Fleischmann, Edgar, 81827, München (DE); Antochin, Sergej, 79279, Vörstetten (DE)
(74) Representative: Wagner, Jutta

(57) **Abstract**

Multilayer film with a longitudinal and transverse direction, comprising:
(a) a base layer;
(b) a coating layer comprising a soluble polymer, pigment and/or dye, wherein the composition and/or concentration of the pigment and/or dye varies in the direction parallel to the film surface;
and
(c) a sealing layer;
use of the film and process for manufacturing the film.

## Description

The present invention relates to a multilayer film which is useful especially for the manufacture of office articles, a use of the multilayer film and a process for manufacturing the multilayer film. In particular, the invention relates to a multilayer film with a longitudinal and transverse direction which comprises a coating layer comprising a soluble polymer, pigment and/or dye, wherein the composition and/or concentration thereof varies in the direction parallel to the film surface.

Plastic films are widely used for various applications like for example packagings and protective coatings. Plastic films have also found widespread use in offices where they can be found in many office articles.

Articles used for office organization, for example folders, often contain tabs with different surfaces. These surfaces can differ for example in colour and / or imprinted information (letters, numbers) to allow easier access to desired documents.

As an example of such office articles, registers are known which consist of sheets of paper to which are attached tabs of different appearance, for example of different colours. These registers are usually produced from several films of uniform composition. To this end, a film of uniform composition is usually wound up on a spool from where it is delivered to a machine which cuts the film into pieces that are in turn attached as tabs to paper sheets.

Registers contain however usually different tabs which function as a marker or indicator for visually distinguishing the paper sheet or a file folder. In order to produce a register, it is thus necessary to use several film spools which each contain only one kind of film, for example a single-coloured film. This method of producing registers is time-consuming and complicate in that it is in general necessary to stop the machine and produce sequentially paper sheets with different tabs. The paper sheets must be combined thereafter in a further step into a register which contains a set of paper sheets with different tabs. This reduces considerably the speed of manufacturing and thus the efficiency of the whole production process.

Similar problems exist in other technical fields where films of different compositions (for example coloured substances) are attached to one object or a set of objects.

Canadian Patent Application No. 2314 283 A1 relates to coloured adhesive tapes and discloses a method for forming a coloured tape comprising: Providing a base film of a polymeric material having a first surface and a second surface; applying a layer of EVA adhesive in liquid form so as to cover the first surface of the base film. The EVA adhesive layer includes colouring pigments and/or dyes. The coloured tapes are suitable for the manufacture of tabs for attachment to a paper sheet to form a coloured tab.

It is thus the object of the present invention to provide a film which allows a more efficient manufacture of articles or sets of articles which contain films of different appearance and/or composition, in particular registers.

The present invention thus provides a multilayer film with a longitudinal and transverse direction, comprising:
(a) a base layer;
(b) a coating layer comprising a soluble polymer, pigment and/or dye, wherein the composition and/or concentration of the pigments and/or dyes varies in the direction parallel to the film surface; and
(c) a sealing layer.

The present invention provides moreover the use of the multilayer film according to the present invention for the manufacture of office articles.

Moreover, the present invention provides a process for manufacturing this multilayer film, comprising the steps:
providing a base layer (a);
applying a coating layer (b) comprising a soluble polymer, pigment and/or dye, wherein the composition and/or concentration of the soluble polymer, pigment and/or dye varies in the direction parallel to the film surface; and
applying a sealing layer (c).

In a preferred embodiment of the multilayer film of the present invention, layer (b) comprises sections in the direction parallel to the film surface in which the composition and/or concentration of the soluble polymer, pigment and/or dye is identical, whereas it is different for neighbouring sections. It is preferred that these sections are arranged in the longitudinal direction of the film.

For the purposes of this invention, the dimensions of the films according to the present invention are in general such that the longitudinal dimension is much larger than the transverse direction. For example, the longitudinal dimension (length of the web) can be from 500 to 10,000 m, preferably 2,000 to 8,000 m, more preferably 5,000 to 7,000 m, for example 6,000 m, and the transverse direction (also to be referred to as "width") can be between 1 and 2 m, preferably between 1.2 to 1.8 m, for example 1.5 m. After applying the coating (a) and sealing layer (b) the film will be in general slitted to a width of 10 to 60 mm, preferably 41 mm.

Preferably, the composition and concentration of the soluble polymer, the pigment and/or dye in coating layer (b) is the same throughout the direction vertical to the film surface, i.e. over the thickness of the coating layer (b).

The base layer (a) of the present invention comprises in general a polymer which is sufficiently thin and flexible to be wound up on a roll and processed by cutting into pieces, preferably tabs. A suitable polymer to be used in the base layer is according to the present invention polyethylene terephthalate (PETP).

Preferably, the base layer (a) comprises a bi-orientated polyethylene terephthalate.

Coating layer (b) of the multilayer film according to the present invention comprises a soluble polymer, dye and/or pigment.

A suitable pigment and/or dye can be selected for example from the group consisting of dioxazine, phthalocyanines, diarylid pyrazolone, cobalt complexes, diketo-pyrrolo-pyrrole, isoindolinone, bon-arylamide, diarylid-m-xylidide, pigment black, chromium complexes, and triazine toluolsulfonamide paraformaldehyde polycondensation polymers.

The pigment and/or dye can be used alone or as a mixture of several pigments and/or dyes.

The selection and amount of the pigment and/or dye to be used depends on the desired colour and colour strength.

A soluble polymer to be used in the coating layer (b) can be selected for example from the group consisting of nitrocellulose, (crosslinked) acrylics, polyesters, or polyurethans. Particularly suitable soluble polymers are for example saturated, weakly branched polyesters with a molecular weight of about 20.000 and an OH - number of 5 to 10 which have been crosslinked with melamine.

"Soluble" within the present description refers to the solubility in either water or another solvent. Other suitable solvents are for example acetic acid acetate and methyl ethyl ketone, preferably acetic acid acetate.

The soluble polymer can be used alone or as mixture of several soluble polymers.

The sealing layer (c) is in general a layer of a sealing polymer, preferably comprising a soluble polyester and/or a mixture of different acryl and acryl-SBR copolymers.

It is preferred according to the present invention if sealing layer (c) is transparent.

It is moreover preferred, when coating layer (b) is arranged in the multilayer film of the present invention in between base layer (a) and sealing layer (c).

The multilayer film according to the present invention has in general a thickness in the range of from 28 to 130, preferably 41 to 80 µm. The base layer (a) has in general a thickness in the range of from 23 to 125, preferably 36 to 75 µm. Coating layer (b) has in general a thickness in the range of from 0.5 to 2.0, preferably 0.7 to 1.3 µm. Sealing layer (c) has in general a thickness in the range of from 3 to 8, preferably 4 to 6 µm.

The films of the present invention can be manufactured in various ways.

The preferred process for manufacturing the multilayer film according to the present invention comprises the steps:
providing a base layer (a);
applying a coating layer (b) comprising a soluble polymer, pigment and/or dye, wherein the composition and/or concentration of the soluble polymer, pigment and/or dye varies in the direction parallel to the film surface; and
applying a sealing layer (c).

In a preferred embodiment of the process of the present invention, layer (b) is applied by a printing technique. The manner in which the polymer, pigment and/or dye will be applied depends on the printing technique. The printing can be achieved in general by any web printing technique. Preferred printing techniques are roto gravure printing and flexoprinting. The most preferred printing method according to the present invention is flexoprinting. These printing techniques are well-known to the person skilled in the art.

The sealing layer (c) of a sealing polymer (or sealing wax) is in general applied on top of coating layer (b). This can be achieved by any means known to the person skilled in the art, preferably by means of rolls. The sealing polymer or sealing wax is in general applied in an amount of 3 to 10 g / m² of the multilayer film.

The multilayer film according to the present invention can be used for a variety of articles where it is of interest to provide articles with surface regions of different characteristics. Moreover, the films according to the present invention can be used for the manufacture of articles or sets of articles that contain films of identical composition which are however different at different places of an article or different among the members of the set.

The present invention is especially suitable for the manufacture of office articles which are generally used for office organization.

Methods and machines for the manufacture of office articles are known to the person skilled in the art. Suitable machines e.g. TM 142 R, TM 142 S and RA 6 are for example available from the company Karl Widmann Schweissmaschinen GmbH, Siemensstrasse 19, 73278 Schlierbach.

When using the multilayer film of the present invention, for example for the manufacture of office articles, it is preferred to have a certain transition region between the areas, wherein the composition and/or concentration of the pigments and/or dyes varies in the direction parallel to the film surface. For example, if said areas represent different colours (i.e. contain different pigments and/or dyes), it is preferred to have a transition zone wherein a very little amount, preferably no pigments and/or dyes are present. Such a composition will facilitate the manufacturing process in that for example commands to initiate a knife for cutting the multilayer film can be given precisely.

## Claims

1. Multilayer film with a longitudinal and transverse direction, comprising:
(a) a base layer;
(b) a coating layer comprising a soluble polymer, pigment and/or dye, wherein the composition and/or concentration of the pigment and/or dye varies in the direction parallel to the film surface; and
(c) a sealing layer.

2. Film according to claim 1, wherein the composition and concentration of the soluble polymer, pigment and/or dye in coating layer (b) is the same throughout the direction vertical to the film surface.

3. Film according to claim 1 or 2, wherein layer (b) comprises sections in the direction parallel to the film surface in which the composition and/or concentration of the soluble polymer, pigment and/or dye is identical, whereas it is different for neighbouring sections.

4. Film according to claim 3, wherein the sections are arranged in the longitudinal direction of the film.

5. Film according to any of claims 1 to 4, wherein the base layer (a) comprises a polyester.

6. Film according to claim 5, wherein the polyester is polyethylene terephthalate.

7. Film according to any of claims 1 to 6, wherein the sealing layer (c) is transparent.

8. Film according to any of claims 1 to 7, wherein coating layer (b) is arranged in between base layer (a) and sealing layer (c).

9. Film according to any of claims 1 to 8, wherein coating layer (b) is applied by a printing technique.

10. Film according to claim 9, wherein the printing technique is flexoprinting or roto gravure printing.

11. Use of the multilayer film according to any of claims 1 to 10 for the manufacture of an office article.

12. Process for manufacturing a multilayer film according to any of claims 1 to 10, comprising the steps:
providing a base layer (a);
applying a coating layer (b) comprising a soluble polymer, pigment and/or dye, wherein the composition and/or concentration of the polymer, pigment and/or dye varies in the direction parallel to the film surface; and
applying a sealing layer (c).
